# EUROPÄISCHE PATENTSCHRIFT

(11) **EP 4 089 304 B1**
(45) Veröffentlichungstag und Bekanntmachung des Hinweises auf die Patenterteilung: **27.12.2023**
(21) Anmeldenummer: 21173531.1
(22) Anmeldetag: 12.05.2021
(51) Int. Cl.: F16K 3/08, F16K 27/04, F16K 31/04, F16K 31/53

(54) **VENTILKARTUSCHE**
VALVE CARTRIDGE
CARTOUCHE DE VANNE

(43) Veröffentlichungstag der Anmeldung: 16.11.2022
(73) Patentinhaber: Flühs Drehtechnik GmbH, 58515 Lüdenscheid (DE)
(72) Erfinder: Wendt, Jörg, 58509 Lüdenscheid (DE); Lange, Lutz, 58511 Lüdenscheid (DE); Klawin, Tim-Florian, 58553 Halver (DE)
(74) Vertreter: Patentanwälte Dörner & Kötter PartG mbB

(56) Entgegenhaltungen:
- CN-U- 206 530 723
- DE-U1-202018 100 921
- US-A- 5 025 832
- US-A1- 2019 001 350

## Beschreibung

Die Erfindung betrifft eine Ventilkartusche, mit einem Kopfstück, das von einer Spindel mittig durchsetzt ist, die in dem Kopfstück drehbar und axial verschiebbar gehalten ist und die eine axiale Durchbohrung zum Durchtritt von Wasser aufweist, wobei durch die Spindel ein Ventil betätigbar ist, durch das der Durchfluss durch die Durchbohrung steuerbar ist.

Mit Hilfe von Ventiloberteilen wird der Austritt von Medien aus Armaturen gesteuert. Für diesen Zweck wird das Ventiloberteil mittels seines Kopfstücks in das Gehäuse einer Armatur geschraubt. Die Spindel wird mit einem Hebel verbunden, über den sie drehbar ist. Bei bekannten Ventiloberteilen (vgl. DE 32 07 895 C2, DE 36 38 180 C2, DE 87 15 044 111) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander.

Mit Durchgangsventilarmaturen ist der Durchfluss von Wasser steuerbar. In der DE 101 30 955 A1 ist ein Durchgangsventil beschrieben, mit einem Gehäuse, das einen Wasserzulaufanschluss und einen Wasserablaufanschluss aufweist. Senkrecht zu dem Wasserdurchgangsbereich ist ein Ventilstößel angeordnet, der über eine Betätigungseinrichtung in den Wasserdurchgangsbereich hineinbewegbar ist, wodurch der Wasserdurchfluss steuerbar ist. Ein weiteres Durchgangsventil ist in der DE 83 07 769 U1 beschrieben. Hier ist der Ventilkörper durch ein drehbares scheibenförmiges Steuerelement gebildet, das in dem Wasserdurchgangsbereich angeordnet ist und gegenüber zwei feststehender Scheiben drehbeweglich angeordnet ist.

In der US 5,025,832 ist ein Durchgangsventil mit drehbarer Scheibe und mehreren Öffnungen offenbart.

Nachteilig an den vorbekannten Durchgangsventilen ist, dass diese aufwendig ausgebildet sind und einen erheblichen Bauraum beanspruchen.

Hier will die Erfindung Abhilfe schaffen. Der Erfindung liegt die Aufgabe zu Grunde, eine Ventilkartusche bereitzustellen, die eine bauraumminimierte Gestaltung einer Durchgangsventilarmatur ermöglicht. Gemäß der Erfindung wird diese Aufgabe durch eine Ventilkartusche mit den Merkmalen des Patentanspruchs 1 gelöst.

Mit der Erfindung ist eine Ventilkartusche bereitgestellt, die eine bauraumminimierte Gestaltung einer Durchgangsventilarmatur ermöglicht. Dadurch, dass die Spindel eine axiale Bohrung zum Wasserdurchtritt aufweist und in dem Kopfstück drehbar und axial verschiebbar gehalten ist, ist eine sehr kompakte Gestaltung der Ventilkartusche erzielbar, da das Kopfstück insbesondere keine vielfachen Absätze zur axialen Fixierung der Spindel aufweist, wodurch der Außendurchmesser des Kopfstücks minimiert ist. Zugleich kann der Durchmesser der Durchbohrung für den Wasserdurchfluss maximiert werden. Die axiale Fixierung der Spindel kann im Zuge der Integration in die Durchgangsventilarmatur durch einen hier vorgesehenen Anschlag erfolgen.

In Weiterbildung der Erfindung weist die Spindel außerhalb des Kopfstücks einen Kopplungsabschnitt mit unrundem, bevorzugt polygonen Querschnitt auf. Hierdurch ist eine bauraumminimierte Kopplung mit einem Bedienteil innerhalb einer Durchgangsventilarmatur ermöglicht.

In Ausgestaltung der Erfindung weist das Kopfstück einen integrierten Ventilsitz auf, auf dem das Ventil zur Anlage kommt. Hierdurch ist eine kompakte Ventilanordnung ermöglicht. Bevorzugt ist das Ventil durch eine Steuerscheibe und eine an dieser anliegenden, drehfest in dem Kopfstück gehaltenen Einlassscheibe gebildet. Dabei ist vorteilhaft zwischen der Einlassscheibe und dem Ventilsitz eine Dichtung angeordnet, die bevorzugt als Lippendichtung ausgebildet ist.

In weiterer Ausgestaltung der Erfindung weist das Kopfstück innen einen Abschnitt mit sich in Richtung der Spindel konisch verengenden Innendurchmesser auf, durch den der Ventilsitz gebildet ist. Hierdurch ist eine gezielte Führung des Wasserstroms auf den Durchgangbereich der Durchgangsscheibe bewirkt, wobei zugleich eine sehr kompakte Integration eines Ventilsitzes erzielt ist.

In Weiterbildung der Erfindung weist die Spindel endseitig wenigstens einen Mitnehmerzapfen auf, über den sie formschlüssig mit der Steuerscheibe verbunden ist. Hierdurch ist eine kompakte drehfeste Verbindung zwischen Spindel und Steuerscheibe erzielt.

In Ausgestaltung der Erfindung weist das Kopfstück an seinem der Spindel zugewandten Ende wenigstens eine Positioniernase auf. Hierdurch ist eine einfache, lagegerechte Montage der Ventilkartusche durch Eingriff der wenigstens einen Positioniernase in eine in einer Armatur angeordnete Positionierausnehmung ermöglicht. Alternativ oder zusätzlich kann auch wenigstens eine Positioniernase an dem der Spindel abgewandten Ende des Kopfstücks angeordnet sein.

Der Erfindung liegt weiterhin die Aufgabe zu Grunde, eine bauraumminimierte Durchgangsventilarmatur bereitzustellen. Gemäß der Erfindung wird diese Aufgabe durch eine Armatur mit den Merkmalen des Patentanspruchs 9 gelöst. Dadurch, dass in die Armatur eine Kartusche der vorstehenden Art eingebracht ist, wobei die Spindel mit ihrem freien Ende an einem in der Armatur angeordneten Anschlag anliegt, wodurch sie axial fixiert ist, ist eine sehr kompakte Ausführung des Armaturgehäuses ermöglicht. Die Spindel kann hierbei direkt oder indirekt, beispielsweise über eine Dicht- oder Gleitscheibe, an dem Anschlag anliegen.

Bevorzugt ist ein Betätigungsteil angeordnet, das formschlüssig mit dem Kopplungsabschnitt verbunden ist. Dabei kann das Betätigungsteil durch einen verschwenkbaren Hebel oder einen motorischen Antrieb gebildet sein.

In Weiterbildung der Erfindung ist der motorische Antrieb durch einen Elektromotor gebildet, der über ein Kegelradgetriebe mit dem Kopplungsabschnitt verbunden ist. Hierdurch ist eine kompakte Anbindung des Elektromotors an die Spindel ermöglicht. Der Motor kann hierzu senkrecht zur Spindel angeordnet sein. Vorteilhaft ist das Kegelrad des Kegelradgetriebes ringförmig ausgebildet und weist eine Innenkontur auf, die der Außenkontur des Kopplungsabschnitts entspricht, auf die es aufgeschoben ist.

In Ausgestaltung der Erfindung ist das Kegelrad durch ein Ringteil gebildet ist, an dem ein Kegelradsegment angeformt, das heißt einteilig angeordnet ist. Hierdurch ist eine kompakte Bauweise erzielt. Der kegelförmige Vorsprung des Kegelrades ist lediglich soweit um das Ringteil geführt, wie es für die maximale Verdrehung der Spindel notwendig ist. Vorzugsweise umspannt der kegelförmige Vorsprung des Kegelradsegments einen Winkel von zwischen 100 ° und 130° des Ringteils.

In weiterer Ausgestaltung der Erfindung sind ein Wasserzulaufanschluss und ein Wasserablaufanschluss angeordnet, die zueinander fluchten und zwischen denen die Ventilkartusche angeordnet ist. Hierdurch ist eine kompakte Bauweise der Armatur erzielt.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

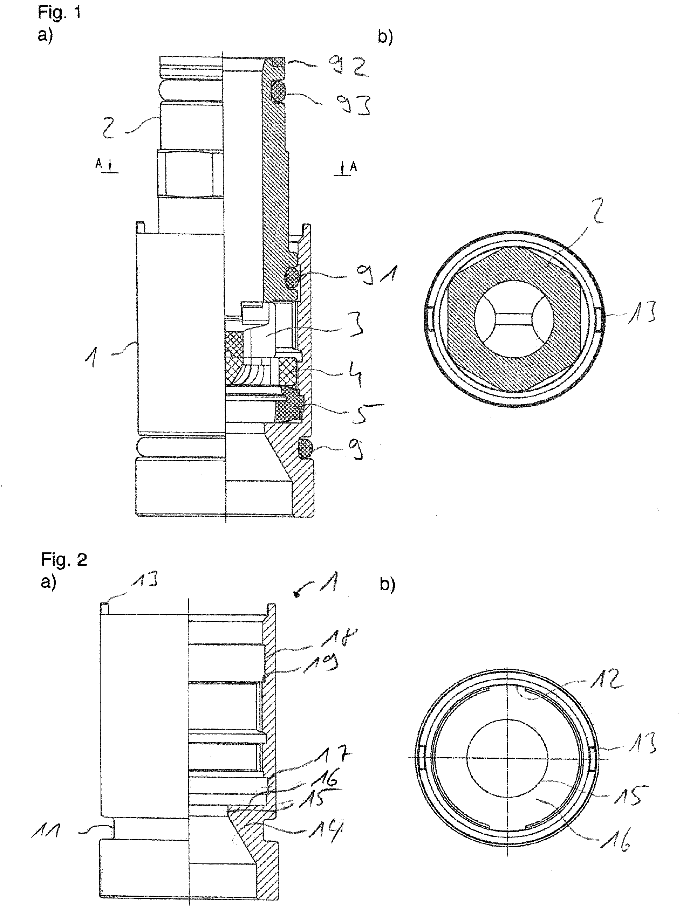

- Fig. 1: die schematische Darstellung einer Ventilkartusche
a) teilweise in Ansicht, teilweise im Axialschnitt;
b) in der Draufsicht
- Fig. 2: die Darstellung des Kopfstücks der Ventilkartusche aus Figur 1
a) teilweise in Ansicht, teilweise im Axialschnitt;
b) in der Draufsicht;

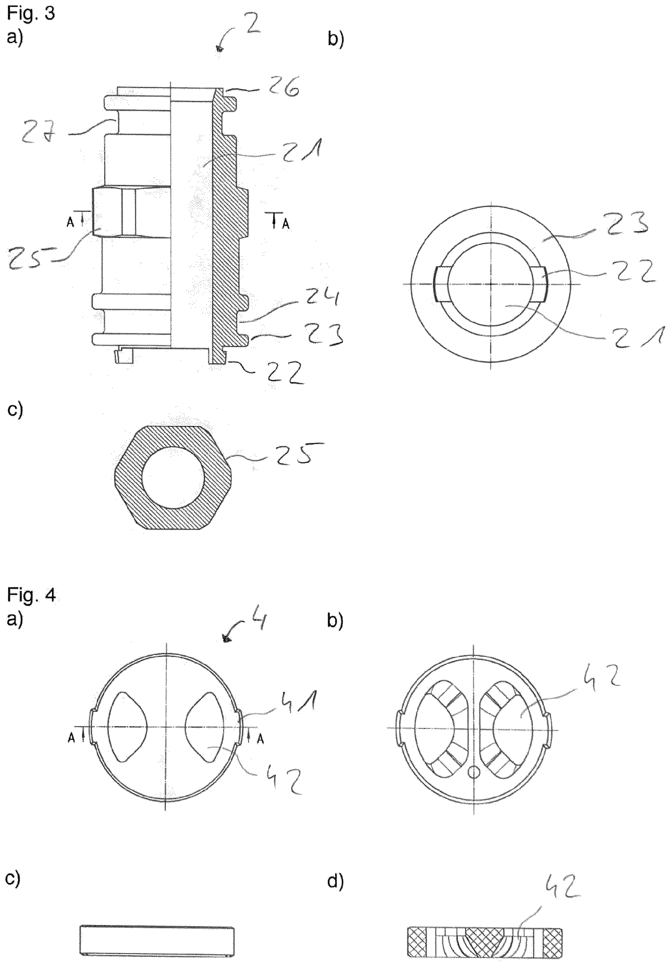

- Fig. 3: die Darstellung der Spindel der Ventilkartusche aus Figur 1
a) teilweise in Ansicht, teilweise im Axialschnitt;
b) in der Ansicht von unten;
c) in Schnittdarstellung A-A;
- Fig. 4: die Darstellung der Einlassscheibe der Ventilkartusche aus Figur 1
a) In der Draufsicht;
b) in der Ansicht von unten;
c) in der Seitenansicht;
d) im Schnitt A-B;

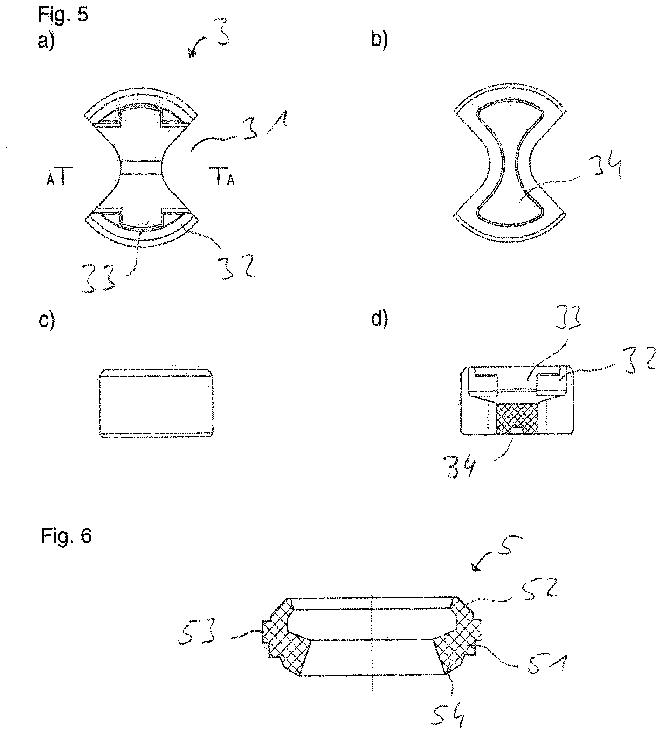

- Fig. 5: die Darstellung der Steuerscheibe der Ventilkartusche aus Figur 1
a) in der Draufsicht;
b) in der Ansicht von unten;
c) in der Seitenansicht;
d) im Schnitt A-A;
- Fig. 6: die Darstellung der Lippendichtung der Ventilkartusche aus Figur 1 und
- Fig. 7: die schematische Darstellung einer Durchgangsventilarmatur
a) im Längsschnitt;
b) im Schnitt A-A.

Die als Ausführungsbeispiel gewählte Ventilkartusche weist ein Kopfstück 1 auf, das von einer in ihm radial geführten Spindel 2 mittig durchsetzt ist. Über Spindel 2 ist ein Ventil betätigbar, das mit einem in dem Kopfstück 1 angeordneten Ventilsitz 16 zur Anlage kommt. Das Ventil ist im Ausführungsbeispiel von einer Steuerscheibe 3 und einer Einlassscheibe 4 gebildet. Die Steuerscheibe 3 ist mit der Spindel 2 formschlüssig verbunden und in dem Kopfstück 1 radial geführt. An ihrer der Spindel 2 abgewandten Seite der Steuerscheibe 3 ist die Einlassscheibe 4 in dem Kopfstück 1 angeordnet, an die sich eine Lippendichtung 5 anschließt, die mit dem Ventilsitz 16 des Kopfstücks 1 zur Anlage kommt. Die Steuerscheibe 3 liegt dichtend auf der Einlassscheibe 4 auf. Im Ausführungsbeispiel sind die Steuerscheibe 3 und die Einlassscheibe 4 als Keramikscheiben ausgebildet.

Das Kopfstück 1 ist im Ausführungsbeispiel als Messingdrehteil ausgebildet und besteht aus einem zylinderförmigen Hohlkörper, in dessen Außenmantelfläche eine Nut 11 zur Aufnahme eines O-Rings 9 eingebracht ist. An seiner der Nut 11 gegenüberliegenden Stirnseite sind diametral gegenüberliegend zwei Positioniernasen 13 angeordnet. In Höhe der Nut 11 ist innen ein durchmesserreduzierter Abschnitt 14 mit sich in Richtung der Positioniernasen konisch verengendem Innendurchmesser angeordnet, der in eine zylindrische Durchführung 15 übergeht. Der durchmesserreduzierte Abschnitt 14 weist eine ringförmige Fläche auf, die den Ventilsitz 16 ausbildet. Beabstandet zu dem Ventilsitz 16 ist in die Innenmantelfläche des Kopfstücks eine Nut 17 zur Aufnahme der Lippendichtung 5 eingebracht. Auf seiner den Positioniernasen 13 zugewandten Seite weist das Kopfstück 1 innen weiterhin eine Ringnut 18 auf, durch die ein Absatz 19 zur Auflage das Bundes 23 der Spindel 2 im Zuge der Integration in eine Durchgangsventilarmatur gebildet ist. Darüber hinaus sind innen diametral gegenüberliegend zwei Axialnuten 12 angeordnet, die sich von dem Absatz 19 bis zu der Nut 17 erstrecken. Die Axialnuten 12 nehmen die Nasen 41 der Einlassscheibe 4 auf, wodurch diese drehfest in dem Kopfstück 1 gehalten ist.

Die Spindel 2 ist als im Wesentlichen zylindrisches Messingdrehteil ausgeführt und weist zentrisch eine axiale Durchbohrung 21 für den Wasserdurchtritt auf. Endseitig sind an die Spindel diametral gegenüberliegend zwei Mitnehmerzapfen 22 zur formschlüssigen Verbindung mit der Steuerscheibe 3 angeordnet. An die Mitnehmerzapfen 22 schließt sich ein umlaufender Bund 23 an, in den eine Dichtungsnut 24 zur Aufnahme eines O-Rings 91 eingebracht ist. Über den O-Ring 91 ist die Spindel 21 gegenüber den Kopfstück 1 abgedichtet. Beabstandet zu dem Bund 23 ist an die Außenmantelfläche der Spindel 2 umlaufend ein Kopplungsabschnitt 25 angeformt, der in Form eines unregelmäßigen Sechskants ausgebildet ist. Auf ihrer den Mitnehmerzapfen 22 gegenüberliegenden Stirnseite ist ein umlaufender Ringsteg 26 angeordnet, der eine Gleitscheibe 92 aufnimmt. Beabstandet zu dem Ringsteg 26 ist in die Spindel eine Dichtungsnut 27 zur Aufnahme eines weiteren O-Rings 93 eingebracht. Die Spindel 2 ist in dem Kopfstück 1 drehbar, jedoch axial verschiebbar angeordnet. Die Steuerscheibe 3 hat eine im Wesentlichen tonnenförmige Ausbildung, aus der zwei sich gegenüberliegende Kreisausschnitte 31 ausgenommen sind. Die Kreisausschnitte 31 weisen im Ausführungsbeispiel einen Winkel von ca. 90° auf. Auf ihrer der Spindel 2 zugewandten Seite weist die Steuerscheibe 3 einen ringförmigen Ansatz 32 auf. Der ringförmige Ansatz 32 umfasst in montiertem Zustand die Mitnehmerzapfen 22 der Spindel 2. Am Fuß des Ansatzes 32 sind Ausnehmungen 33 ausgebildet, in die jeweils einen Mitnehmerzapfen 22 fasst. Auf ihrer der Spindel 2 abgewandten Stirnseite ist in der Steuerscheibe 3 eine Vertiefung 34 eingebracht.

Die Einlassscheibe 4 ist im Wesentlichen zylinderförmig ausgebildet und weist auf ihrem Umfang zwei diametral gegenüberliegend angeordnete Nasen 41 auf. Mit den Nasen 41 fasst die Einlassscheibe 4 in die Axialnuten 12, die hierzu innen in dem Kopfstücks 1 angeordnet sind, wodurch die Einlassscheibe 4 in dem Kopfstück 1 drehfest gehalten ist. Die Einlassscheibe 4 liegt auf der Lippe 52 der Lippendichtung 5 auf und weist sektorförmige Durchtrittsöffnungen 42 auf. Im Ausführungsbeispiel sind zwei sich diametral gegenüberliegende Durchtrittsöffnungen 42 angeordnet.

Die Lippendichtung 5 ist im Ausführungsbeispiel aus Gummi ausgebildet und umfasst ein Ringstück 51, an dem auf seiner der Einlassscheibe 4 zugewandten Stirnseite eine Lippe 52 angeformt ist. Die Lippe 52 hat im Querschnitt eine im Wesentlichen trapezförmige Ausbildung. Die Lippe 52 ist unter einem Winkel zur Horizontalen angeordnet. Die Außenfläche der Lippe 52 liegt an der Einlassscheibe 4 dichtend an. Das Ringstück 51 ist außen mit einem Bund 53 versehen, der in die Nut des 17 des Kopfstücks 1 eingreift. Innen ist an dem Mittelstück 51 eine Wulst 54 ausgebildet. Die Außenseite der Wulst 54 liegt plan auf dem Ventilsitz 16 des durchmesserreduzierten Abschnitts 14 auf.

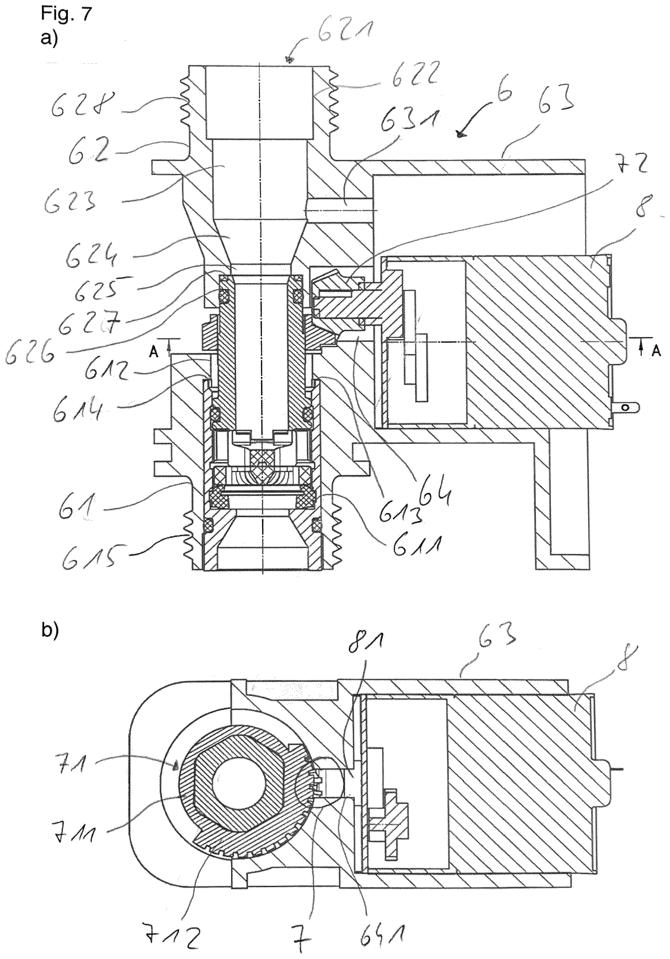

In Figur 7 ist ein Armaturengehäuse 6 dargestellt, mit einem Wasserdurchlaufkanal, in den eine erfindungsgemäße Ventilkartusche eingesetzt ist. Das Armaturengehäuse 6 umfasst einen Wasserzulaufabschnitt 61 und einen Wasserauslaufabschnitt 62, durch die der Wasserdurchlaufkanal geführt ist, sowie einen Antriebsabschnitt 63.

Der Wasserzulaufabschnitt 61 weist eine zylinderförmige Kartuschenaufnahme 611 auf, die durch einen innendurchmesserreduzierten Abschnitt 612 begrenzt ist, durch den ein Anschlag 613 gebildet ist. In dem Anschlag 613 sind diametral gegenüberliegend zwei Positionierausnehmungen 614 eingebracht. Endseitig weist der Wasserzulaufabschnitt 61 außen ein Außengewinde 615 zum Anschluss einer Wasserzulaufleitung auf.

Der Wasserauslaufabschnitt 62 umfasst eine Stufenbohrung 621, die einen ersten zylindrischen Abschnitt 622 aufweist, an den sich ein zweiter zylindrischer, innendurchmesserreduzierter Abschnitt 623 anschließt, der in einen konisch zulaufenden Abschnitt 624 übergeht, der in einen dritten zylindrischen Abschnitt 625 mündet, an den sich ein vierter zylindrischer, durchmessererweiterter Abschnitt 626 anschließt, durch den eine ringförmige Anlagefläche 627 gebildet ist. Endseitig weist der Wasserablaufabschnitt 62 außen ein Außengewinde 628 zum Anschluss einer Wasserablaufleitung auf.

Der Antriebsabschnitt 63 ist im Wesentlichen zylindrisch ausgebildet und mündet in einen Getrieberaum 64, der einen Durchgang 641 aufweist, der zwischen dem Wasserzulaufabschnitt 61 und dem Wasserauslaufabschnitt 62 mündet. Weiterhin ist in dem Antriebsabschnitt 63 eine Messbohrung 631 angeordnet, die in dem zweiten Abschnitt 623 der Stufenbohrung 621 mündet.

Die Ventilkartusche ist in die Kartuschenaufnahme 611 eingebracht, wobei das Kopfstück 1 an dem Anschlag 613 anliegt. Die beiden Positioniernasen 13 des Kopfstücks 1 greifen dabei in die Positionierausnehmungen 614 ein, wodurch ein lagerichtiger Einbau gewährleistet ist. Das Kopfstück ist über den O-Ring 9 gegenüber der Kartuschenaufnahme 611 abgedichtet. Die Spindel 2 der Ventilkartusche ragt durch den innendurchmesserreduzierten Abschnitt 612 hindurch. Auf dem Kopplungsabschnitt 25 ist ein Kegelrad 71 eines Kegelradgetriebes 7 aufgebracht, das im Ausführungsbeispiel aus einem hohlzylinderförmigen Ringteil 711 gebildet ist, an dem außen ein Kegelradsegment 712 angeordnet ist.

Das Kegelradsegment 712 umspannt einen Winkel von 110° des Ringteils 711. Je nach maximalem gewünschten Drehwinkel der Spindel 2 kann das Kegelradsegment 712 auch einen geringeren oder einen größeren Winkel des Ringteils 711 umspannen. Das Ringteil 711 weist eine Innenkontur eines unregelmäßigen Sechskants auf, die mit der Außenkontur des Kopplungsabschnitts 25 korrespondiert, auf der es angeordnet ist. Das Kegelrad 71 ist so formschlüssig mit der Spindel verbunden, wobei das Kegelrad 71 mit seinem Kegelradsegment 712 in den Durchgang 641 hineinragt.

Kopfseitig liegt die Spindel 2 über die Gleitscheibe 92 an der Anlagefläche 627 des Wasserablaufabschnitts 62 an. Radial ist die Spindel 2 gegenüber dem vierten zylindrischen Abschnitt 626 der Stufenbohrung 621 über den in der Dichtungsnut 27 angeordneten O-Ring 93 abgedichtet.

In dem Antriebsabschnitt 63 ist ein Elektromotor 8 angeordnet, dessen Antriebswelle 81 in den Getrieberaum 64 hineinragt. Auf die Antriebswelle 81 ist ein Kegelritzel 72 aufgebracht, das mit dem Kegelradsegment 712 des Kegelrades 71 im Eingriff ist. Zur Regelung des durch den Wasserablaufabschnitt 62 fließenden Wasserstroms ist eine - nicht dargestellte - Steuer- und Regeleinrichtung angeordnet, die mit einem in die Messbohrung 631 eingebrachten Sensor, vorzugsweise einem Strömungs- und/oder Temperatursensor verbunden ist und über die der Elektromotor 8 ansteuerbar ist.

## Patentansprüche

1. Ventilkartusche, mit einem Ventil und einem Kopfstück (1), das von einer Spindel (2) mittig durchsetzt ist, die in dem Kopfstück (1) drehbar und axial verschiebbar gehalten ist und die eine axiale Durchbohrung (21) zum Durchtritt von Wasser aufweist, wobei durch die Spindel (2) das Ventil betätigbar ist, durch das der Wasserdurchfluss durch die Durchbohrung (21) steuerbar ist und wobei die Spindel (2) außerhalb des Kopfstücks (1) einen Kopplungsabschnitt (25) mit unrundem Querschnitt aufweist.

2. Ventilkartusche nach Anspruch 1, **dadurch gekennzeichnet, dass** der Kopplungsabschnitt (25) einen polygonen Querschnitt aufweist.

3. Ventilkartusche nach Anspruch 1 oder 2, **dadurch gekennzeichnet, dass** das Kopfstück (1) einen integrierten Ventilsitz (16) aufweist, auf dem das Ventil zur Anlage kommt.

4. Ventilkartusche nach Anspruch 3, **dadurch gekennzeichnet, dass** das Ventil durch eine Steuerscheibe (3) und eine an dieser anliegenden, drehfest in dem Kopfstück (1) gehaltenen Einlassscheibe (4) gebildet ist.

5. Ventilkartusche nach Anspruch 4, **dadurch gekennzeichnet, dass** zwischen der Einlassscheibe (3) und dem Ventilsitz (16) eine Dichtung angeordnet ist, die bevorzugt als Lippendichtung (5) ausgebildet ist.

6. Ventilkartusche nach einem der Ansprüche 3 bis 5, **dadurch gekennzeichnet, dass** das Kopfstück (1) innen einen Abschnitt (14) mit sich in Richtung der Spindel konisch verengendem Innendurchmesser aufweist, durch den der Ventilsitz (16) gebildet ist.

7. Ventilkartusche nach einem der Ansprüche 4 bis 6, **dadurch gekennzeichnet, dass** die Spindel (2) endseitig wenigstens einen Mitnehmerzapfen (22) aufweist, über den sie formschlüssig mit der Steuerscheibe (3) verbunden ist.

8. Ventilkartusche nach einem der vorgenannten Ansprüche, **dadurch gekennzeichnet, dass** das Kopfstück (1) an seinem der Spindel (2) zugewandten Ende und/oder an seinem der Spindel (2) abgewandten Ende wenigstens eine Positioniernase (13) aufweist.

9. Armatur, mit einem Wasserdurchlaufkanal, in den eine Ventilkartusche nach einem der vorgenannten Ansprüche eingebracht ist, wobei die Spindel (2) mit ihrem freien Ende an einem in dem Armaturengehäuse (6) der Armatur angeordneten Anschlag (627) anliegt, wodurch sie axial fixiert ist.

10. Armatur nach Anspruch 9, **dadurch gekennzeichnet, dass** ein Betätigungsteil angeordnet ist, das formschlüssig mit dem Kopplungsabschnitt (25) verbunden ist.

11. Armatur nach 10, **dadurch gekennzeichnet, dass** das Betätigungsteil einen verschwenkbaren Hebel oder einen motorischen Antrieb umfasst.

12. Armatur nach Anspruch 11, **dadurch gekennzeichnet, dass** der motorische Antrieb durch einen Elektromotor (8) gebildet ist, der über ein Kegelradgetriebe (7) mit dem Kopplungsabschnitt (25) verbunden ist.

13. Armatur nach Anspruch 12, **dadurch gekennzeichnet, dass** das Kegelrad (71) des Kegelradgetriebes (7) ringförmig ausgebildet ist und eine Innenkontur aufweist, die der Außenkontur des Kopplungsabschnitts (25) entspricht, auf die es aufgeschoben ist.

14. Armatur nach Anspruch 13, **dadurch gekennzeichnet, dass** das Kegelrad (71) durch ein Ringteil (711) gebildet ist, an dem ein Kegelradsegment (712) angeformt ist, das vorzugsweise einen Winkel von zwischen 100 ° und 130° umspannt.

15. Armatur nach einem der Ansprüche 9 bis 14, **dadurch gekennzeichnet, dass** ein Wasserzulaufanschluss und ein Wasserablaufanschluss angeordnet sind, die zueinander fluchten und zwischen denen die Ventilkartusche angeordnet ist.

## Claims

1. Valve cartridge having a valve and a head piece (1), which is centrally penetrated by a spindle (2), which is rotatably and axially displaceably held in the head piece (1) and which has an axial through-bore (21) for the passage of water, wherein the valve can be actuated by the spindle (2), by means of which valve the flow of water through the through-bore (21) can be controlled and wherein the spindle (2) has a coupling section (25) with a non-circular cross-section outside the head piece (1).

2. Valve cartridge according to claim 1, **characterised in that** the coupling section (25) has a polygonal cross-section.

3. Valve cartridge according to claim 1 or 2, **characterised in that** the head piece (1) has an integrated valve seat (16), on which the valve comes to rest.

4. Valve cartridge according to claim 3, **characterised in that** the valve is formed by a control disc (3) and an inlet disc (4) resting against the latter and is non-rotatably held in the head piece (1).

5. Valve cartridge according to claim 4, **characterised in that** a seal is arranged between the inlet disc (4) and the valve seat (16), which seal is preferably designed as a lip seal (5).

6. Valve cartridge according to one of claims 3 to 5, **characterised in that** the head piece (1) has a section (14) on the inside with an inner diameter conically narrowing in the direction of the spindle, by which the valve seat (16) is formed.

7. Valve cartridge according to one of claims 4 to 6, **characterised in that** the spindle (2) has at least one driver pin (22) at the end, via which it is positively connected to the control disc (3).

8. Valve cartridge according to one of the previous claims, **characterised in that** the head piece (1) has at least one positioning lug (13) at its end facing the spindle (2) and/or at its end facing away from the spindle (2).

9. Fitting with a water flow channel, into which a valve cartridge according to one of the previous claims is introduced, wherein the spindle (2) bears with its free end against a stop (627) arranged in the fitting housing (6) of the fitting, whereby it is axially fixed.

10. Fitting according to claim 9, **characterised in that** an actuating part is arranged, which is positively connected to the coupling section (25).

11. Fitting according to claim 10, **characterised in that** the actuating part comprises a pivotable lever or a motorised drive.

12. Fitting according to claim 11, **characterised in that** the motorised drive is formed by an electric motor (8), which is connected to the coupling section (25) via a bevel gear (7).

13. Fitting according to claim 12, **characterised in that** the bevel gear wheel (71) of the bevel gear (7) is annular and has an inner contour which corresponds to the outer contour of the coupling section (25), onto which it is pushed.

14. Fitting according to claim 13, **characterised in that** the bevel gear wheel (71) is formed by an annular part (711), onto which a bevel gear wheel segment (712) is moulded, which preferably spans an angle of between 100° and 130°.

15. Fitting according to one of claims 9 to 14, **characterised in that** a water inlet connection and a water outlet connection are arranged, which are aligned with one another and between which the valve cartridge is arranged.

## Revendications

1. Cartouche de vanne, comprenant une vanne et une pièce têtière (1) traversée en son centre par une broche (2) maintenue dans la pièce têtière (1) de façon à pouvoir tourner et à être décalable axialement, et qui présente un alésage axial traversant (21) pour le passage de l'eau, sachant que la vanne est actionnable par la broche (2) et qu'elle permet de commander le débit de l'eau qui passe par l'alésage traversant (21) et sachant que la broche (2) présente, hors de la pièce têtière (1), un segment de couplage (25) dont la section n'est pas ronde.

2. Cartouche de vanne selon la revendication 1, **caractérisée en ce que** le segment de couplage (25) présente une section polygonale.

3. Cartouche de vanne selon la revendication 1 ou 2, **caractérisée en ce que** la pièce têtière (1) présente un siège (16) de vanne intégré sur lequel la vanne vient appliquer.

4. Cartouche de vanne selon la revendication 3, **caractérisée en ce que** la vanne est formée par un disque de commande (3) et par un disque d'admission (4) appliquant contre le disque premier cité et maintenu dans la pièce têtière (1) de façon à ne pas pouvoir tourner.

5. Cartouche de vanne selon la revendication 4, **caractérisée en ce qu'**entre le disque d'admission (4) et le siège de vanne (16) est disposé un joint configuré de manière préférentielle en joint à lèvres (5).

6. Cartouche de vanne selon l'une des revendications 3 à 5, **caractérisée en ce que** la pièce têtière (1) présente à l'intérieur un segment (14) dont le diamètre intérieur - par lequel est formé le siège (16) de vanne - va diminuant comme un cône en direction de la broche.

7. Cartouche de vanne selon l'une des revendications 4 à 6, **caractérisée en ce que** la broche (2) présente à son extrémité au moins un taquet entraîneur (22) via lequel elle est reliée par adhérence de formes avec le disque de commande (3).

8. Cartouche de vanne selon l'une des revendications précédentes, **caractérisée en ce que** la pièce têtière (1) présente, à son extrémité regardant la broche (2) et/ou à son extrémité ne regardant pas la broche (2), au moins une saillie de positionnement (13).

9. Robinetterie, comprenant un conduit de passage de l'eau dans lequel est introduite une cartouche de vanne selon l'une des revendications précédentes, sachant que la broche (2) applique par son extrémité libre contre une butée (627) disposée dans le boîtier (6) de la robinetterie, ce qui a pour effet de l'immobiliser axialement.

10. Robinetterie selon la revendication 9, **caractérisée en ce qu'**est disposée une pièce d'actionnement reliée par adhérence de formes avec le segment de couplage (25).

11. Robinetterie selon la revendication 10, **caractérisée en ce que** la pièce d'actionnement comprend un levier pivotant ou un entraînement motorisé.

12. Robinetterie selon la revendication 11, **caractérisée en ce que** l'entraînement motorisé est formé par un moteur électrique (8) relié, via une transmission (7) à engrenages coniques, au segment de couplage (25).

13. Robinetterie selon la revendication 12, **caractérisée en ce que** l'engrenage conique (71) de la transmission (7) à engrenages coniques est configuré annulaire et présente un contour intérieur épousant le contour extérieur du segment de couplage (25) sur lequel il est enfilé.

14. Robinetterie selon la revendication 13, **caractérisée en ce que** l'engrenage conique (71) est formé par une pièce annulaire (711) contre laquelle est moulé un segment (712) d'engrenage conique, segment qui présente un angle de préférence compris entre 100° et 130°.

15. Robinetterie selon l'une des revendications 9 à 14, **caractérisée en ce que** sont disposés un raccord d'arrivée d'eau et un raccord d'évacuation d'eau réciproquement alignés, et que la cartouche de vanne est disposée entre eux.
